# EUROPÄISCHE PATENTSCHRIFT

(11) **EP 0 982 493 B1**
(45) Veröffentlichungstag und Bekanntmachung des Hinweises auf die Patenterteilung: **24.09.2003**
(21) Anmeldenummer: 99810611.6
(22) Anmeldetag: 09.07.1999
(51) Int. Cl.: F02M 61/18, F02M 61/16

(54) **Verfahren zum Herstellen einer Brennstoffeinspritzdüse und Brennstoffeinspritzdüse**
Method of making a fuel injection nozzle and fuel injection nozzle
Procédé de fabrication d'un injecteur de combustible et injecteur de combustible

(30) Priorität: 27.08.1998 EP 98810847
(43) Veröffentlichungstag der Anmeldung: 01.03.2000
(73) Patentinhaber: Wärtsilä Schweiz AG, 8401 Winterthur (CH)
(72) Erfinder: Maula, Antonio, 8308 Illnau (CH)
(74) Vertreter: Sulzer Management AG

(56) Entgegenhaltungen:
- EP-A- 0 404 407
- EP-A- 0 569 655
- DE-A- 3 736 699
- DE-A- 4 222 137
- PATENT ABSTRACTS OF JAPAN vol. 011, no. 196 (M-601), 24. Juni 1987 (1987-06-24) & JP 62 020672 A (HITACHI ZOSEN CORP), 29. Januar 1987 (1987-01-29)

## Beschreibung

Die Erfindung betrifft ein Verfahren zum Herstellen einer Brennstoffeinspritzdüse sowie eine Brennstoffeinspritzdüse für einen Dieselmotor, insbesondere einen Zweitakt-Grossdieselmotor, gemäss dem Oberbegriff des unabhängigen Anspruchs der jeweiligen Kategorie.

Bei Grossdieselmotoren, z. B. Schiffsmotoren, die nach dem Zweitakt-Verfahren mit Längsspülung arbeiten, sind üblicherweise an jedem Zylinder mehrere, beispielsweise drei, Brennstoffeinspritzdüsen vorgesehen, die um das zentral angeordnete Auslassventil herum im Zylinderkopf angeordnet sind. Eine solche Brennstoffeinspritzdüse weist an ihrem Düsenkopf mindestens eins, aber üblicherweise mehrere Düsenlochbohrungen auf, durch welche der Brennstoff in den Verbrennungsraum des Zylinders eingespritzt wird. Um den Einspritzvorgang zu beginnen oder zu beenden, ist in der Brennstoffeinspritzdüse eine bewegliche Düsennadel vorgesehen, die mit einem Nadelsitz derart zusammenwirkt, dass der Durchgang zu den Düsenlochbohrungen geöffnet oder verschlossen wird.

Insbesondere der Düsenkopf, der in den Brennraum des Zylinders hineinragt, unterliegt im Betriebszustand sehr hohen thermischen und korrosiven Belastungen. Meistens befindet sich der Düsenkopf im Brennstoffstrahl einer anderen, in Drallrichtung der Luftströmung gesehen vorgelagerten Brennstoffeinspritzdüse, was die genannten Belastungen noch erhöht. Als Folge kommt es am Düsenkopf zu sehr hohen Oberflächentemperaturen, welche die Heisskorrosion, die bekanntermassen hauptsächlich durch im Brennstoff enthaltenes Vanadium und Natrium verursacht wird, begünstigt, den Materialabtrag somit beschleunigt und damit zu einer relativ kurzen Lebensdauer des Düsenkopfs führt.

Beim Nadelsitz dagegen sind es im Betriebszustand in erster Linie die extrem starken mechanischen Belastungen, welche die Lebensdauer begrenzen. Dies sind insbesondere die Druckbelastungen und die Schlagbelastungen, die aus den hohen Einspritzdrücken resultieren, sowie der durch Kavitation und Erosion verursachte Materialabtrag. Durch diesen Materialabtrag werden auch die Düsenlochbohrungen geschädigt.

Um diesen unterschiedlichen Belastungen Rechnung zu tragen, ist es bekannt, die Brennstoffeinspritzdüse zweiteilig mit einem Düsenkörper, der den Nadelsitz umfasst, und eihem separaten Düsenkopf, der die Düsenlochbohrungen enthält, herzustellen. Der Düsenkörper besteht dabei aus einem sehr harten, mechanisch stabilen Werkstoff, der Düsenkopf dagegen aus einem heisskorrosionsbeständigen Werkstoff. Der Düsenkopf ist als kostengünstiges Austauschteil lösbar mit dem Düsenkörper verbunden (siehe z.B. DE-A-3 736 699).

Ausgehend von diesem Stand der Technik liegt der Erfindung die Aufgabe zugrunde, ein anderes Verfahren vorzuschlagen, mit welchem ein Brennstoffeinspritzventil für einen Dieselmotor herstellbar ist, bei dem einerseits der Düsenkopf den thermischen und korrosiven Belastungen und andererseits der Nadelsitz sowie die Düsenlochbohrungen den mechanischen Belastungen, die in einem Dieselmotor, insbesondere einem Grossdieselmotor, auftreten, dauerhaft standhalten kann bzw. können. Ferner soll durch die Erfindung ein entsprechendes Brennstoffeinspritzventil bereitgestellt werden.

Die diese Aufgaben in verfahrenstechnischer und apparativer Hinsicht lösenden Gegenstände der Erfindung sind durch die Merkmale des unabhängigen Anspruchs der jeweiligen Kategorie gekennzeichnet.

Erfindungsgemäss wird also ein Verfahren zum Herstellen einer Brennstoffeinspritzdüse für einen Dieselmotor, insbesondere einen Zweitakt-Grossdieselmotor, vorgeschlagen, die eine Längsbohrung zum Führen einer Düsennadel und zum Einbringen von Brennstoff aufweist, welche Längsbohrung sich bis in einen Düsenkopf erstreckt, wo mindestens eine Düsenlochbohrung von der Längsbohrung ausgeht, sowie einen in der Längsbohrung angeordneten Nadelsitz zum Zusammenwirken mit der Düsennadel. Das erfindungsgemässe Verfahren ist dadurch gekennzeichnet, dass zunächst ein einstückiger Grundkörper, der zumindest die Längsbohrung, den Nadelsitz und den Düsenkopf umfasst, aus einem härtbaren Werkstoff, insbesondere einem Vergütungsstahl, im ungehärteten Zustand und im wesentlichen in der gewünschten äusseren Endform hergestellt wird, dass anschliessend eine Beschichtung aus einer heisskorrosionsbeständigen Legierung auf den Düsenkopf aufgebracht wird, dass danach die Düsenlochbohrung hergestellt wird, und dass dann der Grundkörper gehärtet wird.

Da gemäss der Erfindung der einstückige Grundkörper, der zumindest die Längsbohrung, den Nadelsitz und den Düsenkopf umfasst, gänzlich aus einem härtbaren Werkstoff, insbesondere einem Vergütungsstahl, besteht, der in einem späteren Verfahrensschritt gehärtet wird, sind insbesondere der Nadelsitz und die Düsenlochbohrung, also die im Betrieb mechanisch am stärksten beanspruchten Teile, mechanisch ausreichend robust, um den hohen Belastungen, insbesondere Schlagbelastungen und Erosion, in einem Zweitakt-Grossdieselmotor dauerhaft standhalten zu können. Durch die Beschichtung des Düsenkopfes mit einer heisskorrosionsbeständigen Legierung ist gewährleistet, dass dieser in den Brennraum ragende Teil der Brennstoffeinspritzdüse, der den höchsten thermischen Belastungen ausgesetzt ist, wirkungsvoll gegen Heisskorrosion geschützt ist. Wesentlich ist für das erfindungsgemässe Verfahren, dass die Härtung bzw. Durchhärtung des Grundkörpers erst nach der Beschichtung des Düsenkopfes erfolgt, weil hierdurch effizient vermieden wird, dass durch den Verfahrensschritt der Beschichtung die durch die Härtung erreichten Materialeigenschaften negativ beeinflusst werden.

Die Dicke der Beschichtung beträgt beispielsweise etwa 0.8 mm bis 1.0 mm. In einer besonders bevorzugten Ausgestaltung wird der Nadelsitz unmittelbar stromaufwärts der Düsenlochbohrung angeordnet. Durch diese Massnahme ist das sogenannte Sacklochvolumen, womit das Volumen gemeint ist, das sich zwischen dem Nadelsitz und der Düsenlochbohrung befindet, also das Volumen der Längsbohrung stromabwärts des Nadelsitzes, besonders klein, sodass sich der Einspritzvorgang durch Schliessen des Durchlasses am Nadelsitz praktisch unmittelbar beenden lässt, ohne dass dann noch weiterer Brennstoff in den Verbrennungsraum tropfen kann. Bei der eingangs beschriebenen zweiteiligen Konstruktion der Brennstoffeinspritzdüse, bei denen der Nadelsitz im Düsenkörper angeordnet ist und die Düsenlochbohrungen im Düsenkopf, resultiert durch die räumliche Entfernung von Nadelsitz und Düsenlochbohrungen ein vergleichsweise grosses Sacklochvolumen. Wird beim Beenden der Brennstoffeinspritzung die Düsennadel in den Nadelsitz gedrückt, so wird der noch im Sacklochvolumen befindliche Brennstoff nicht mehr vom Speisedruck beaufschlagt. Dieser Teil des Brennstoffs kann dann nach Beendigung der Einspritzung durch die Düsenlochbohrungen schlecht zerstäubt in den Verbrennungsraum gelangen, wo er jedoch nur wenig oder gar nicht verbrennt. Er führt zu zusätzlicher Schadstoffbelastung (höherer Stickstoffoxid (NOx) - Gehalt), erhöhtem Brennstoffverbrauch sowie zu Ablagerungen, beispielsweise Trompetenbildung, an den Düsenlochbohrungen, an allen Teilen des Verbrennungsraums und der abgasführenden Komponenten. Diese nachteiligen Effekte können durch das kleine Sacklochvolumen, also die unmittelbare Nachbarschaft von Nadelsitz und Düsenlochbohrung, vermieden werden.

Die Beschichtung des Düsenkopf erfolgt vorzugsweise mittels eines Laserauftragverfahrens insbesondere mittels Lasercladding, weil dieses Materialbeschichtungsverfahren ein kontrolliertes, gut reproduzierbares und konzentriertes Aufschmelzen des Beschichtungswerkstoffs ermöglicht. Femer führt Lasercladding zu einer kompakten, porenfreien Schutzschicht. Auch resultiert nur eine geringe Durchmischungszone, sodass es zu keiner wesentlichen negativen Beeinflussung des Werkstoffs des Grundkörpers kommt. Zudem resultiert beim Lasercladding eine besonders gute Haftung der Beschichtung auf dem Grundkörper.

Vor dem Härten des Grundkörpers erfolgt vorzugsweise noch eine Nachbehandlung der Düsenlochbohrung bzw. der Düsenlochbohrungen, beispielsweise zum Entgraten der Bohrungen und/oder zum Abrunden der Übergangsbereiche zwischen der Längsbohrung und der Düsenlochbohrung. Diese Bearbeitung erfolgt vorzugsweise elektrochemisch, insbesondere mittels Elysieren.

Die erfindungsgemässe Brennstoffeinspritzdüse ist dadurch gekennzeichnet, dass ein einstückiger Grundkörper vorgesehen ist, der zumindest die Längsbohrung, den Nadelsitz und den Düsenkopf umfasst, und der aus einem härtbaren Werkstoff, insbesondere einem Vergütungsstahl, im ungehärteten Zustand und im wesentlichen in der gewünschten äusseren Endform hergestellt und anschliessend gehärtet ist, dass der Düsenkopf des Grundkörpers eine Beschichtung aus einer heisskorrosionsbeständigen Legierung aufweist, die vor dem Härten des Grundkörpers aufgebracht ist und dass die Düsenlochbohrung nach dem Aufbringen der Beschichtung und vor dem Härten des Grundkörpers hergestellt ist.

Die Vorteile und bevorzugten Massnahmen der erfindungsgemässen Brennstoffeinspritzdüse entsprechen den im Zusammenhang mit dem Verfahren erläuterten.

Ferner ist es vorteilhaft, wenn die äussere Begrenzungsfläche des Grundkörpers einen konisch ausgestalteten Bereich zum Abstützen der Brennstoffeinspritzdüse in einem Zylinderkopf aufweist. Durch die konische Ausgestaltung lässt sich eine grosse Kontaktfläche zwischen der Brennstoffeinspritzdüse und dem Zylinderkopf, in den sie eingebaut wird, erreichen. Diese grosse Kontaktfläche ist vorteilhaft, weil sich zum einen die auf die Brennstoffeinspritzdüse wirkende Druckbelastung besser auf den Zylinderkopf übertragen lässt, und weil sie zum anderen einen besonders guten Wärmefluss zwischen der Brennstoffeinspritzdüse und dem typischerweise gekühlten Zylinderkopf ermöglicht, sodass die Wärme besser aus der Brennstoffeinspritzdüse abfliessen kann.

Besonders bevorzugt sind dabei solche Ausgestaltungen, bei denen der Konuswinkel des konischen Bereichs zwischen 15° und 35°, insbesondere zwischen etwa 22° und 26°, liegt. Für kleinere Konuswinkel als etwa 15° besteht nämlich die Gefahr, dass es beim Betrieb zu einem Einpressen der Brennstoffeinspritzdüse in den Zylinderkopf kommt, sodass diese nur noch unter sehr hohem Arbeitsaufwand entfernbar ist. Für grössere Konuswinkel resultiert eine schlechtere Kraftübertragung von der Brennstoffeinspritzdüse auf den Zylinderkopf.

Weitere vorteilhafte Massnahmen und bevorzugte Ausgestaltungen der Erfindungsgegenstände ergeben sich aus den abhängigen Ansprüchen.

Im Folgenden wird die Erfindung sowohl in Bezug auf die verfahrenstechnischen als auch in Bezug auf die apparativen Aspekte anhand von Ausführungsbeispielen und anhand der Zeichnung näher erläutert. In der schematischen, nicht massstäblichen Zeichnung zeigen :
- Fig. 1:: einen Längsschnitt durch ein Ausführungsbeispiel der erfindungsgemässen Brennstoffeinspritzdüse, montiert in einem Zylinderkopf, und
- Fig. 2:: eine vergrösserte Darstellung des Grundkörpers im Längsschnitt (ohne Düsennadel).

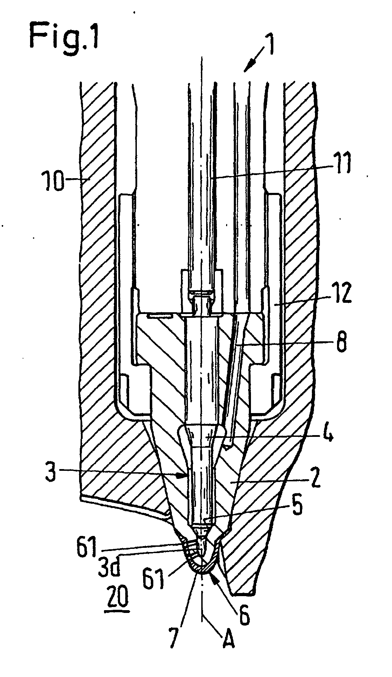

Fig. 1 zeigt in einem Längsschnitt für das Verständnis der Erfindung wesentliche Teile eines Ausführungsbeispiels der erfindungsgemässen Brennstoffeinspritzdüse, die gesamthaft mit dem Bezugszeichen 1 versehen ist. Auf die Darstellung an sich bekannter Elemente von Brennstoffeinspritzdüsen der gattungsgemässen Art wurde aus Gründen der besseren Übersicht verzichtet. Die Brennstoffeinspritzdüse 1 ist für den Einbau in einen Zylinderkopf 10 eines Zweitakt-Grossdieselmotors, beispielsweise eines Schiffmotors, ausgestaltet.

Die im folgenden verwendeten relativen Lagebezeichnungen wie "oben, unten, oberhalb, unterhalb..." beziehen sich stets auf die Darstellung in der Zeichnung und sind so zu verstehen, dass sie lediglich beispielhaften, aber keinen einschränkenden Charakter haben.

Die Brennstoffeinspritzdüse 1, deren Längsachse mit dem Bezugszeichen A bezeichnet ist, umfasst einen einstückigen Grundkörper 2, dessen unteres Ende einen Düsenkopf 6 bildet. Im montierten Zustand, den Fig. 1 zeigt, ragt der Düsenkopf 6 in den Verbrennungsraum 20 eines Zylinders des Dieselmotors. Im Grundkörper ist eine in Richtung der Längsachse A verlaufende Längsbohrung 3 vorgesehen, die sich vom oberen Ende des Grundkörpers 2 bis in den Düsenkopf 6 erstreckt. Der Düsenkopf 6 weist mindestens eine Düsenlochbohrung, typischerweise z.B. fünf Düsenlochbohrungen 61, auf, welche jeweils von der Längsbohrung 3 ausgehen, und durch welche der Brennstoff in den Verbrennungsraum 20 austreten kann. In der Längsbohrung 3 ist ein Nadelsitz 5 vorgesehen, der als Verjüngung der Längsbohrung 3 ausgestaltet ist. Ebenfalls in der Längsbohrung 3 ist eine bewegliche Düsennadel 4 angeordnet, die sich im wesentlichen parallel zur Längsachse A der Brennstoffeinspritzdüse 1 erstreckt und deren unteres Ende in an sich bekannter Weise so mit Nadelsitz 5 zusammenwirkt, dass es am Nadelsitz 5 den Durchlass zu den Düsenlochbohrungen 61 öffnet oder verschliesst.

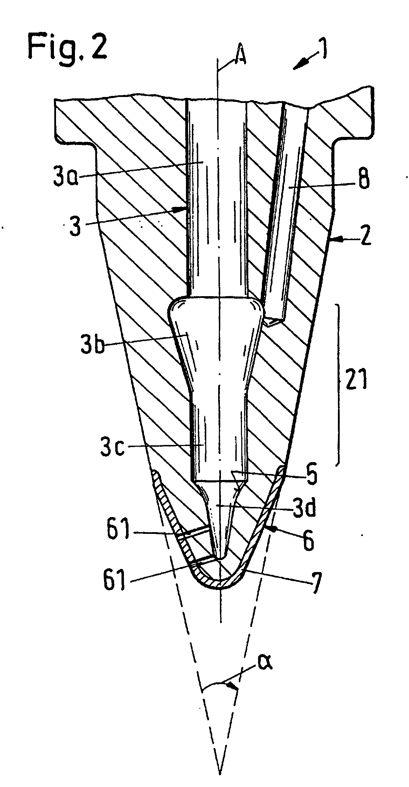

Fig. 2 zeigt den Grundkörper 2 in einer vergrösserten Darstellung, wobei die Düsennadel 4 aus Gründen der besseren Übersicht nicht eingezeichnet ist.

Die Längsbohrung 3 weist einen oberen Bereich 3a (siehe Fig. 2) auf, dessen Innendurchmesser nur geringfügig grösser ist als der Aussendurchmesser der Düsennadel 4 in diesem Bereich, sodass dieser obere Bereich 3a die Düsennadel 4 führt. Unterhalb des oberen Bereichs 3a erweitert sich die Längsbohrung 3 zunächst und verjüngt sich dann wieder, sodass sie einen Druckraum 3b für die hydraulische Betätigung der Düsennadel 4 bildet. In den Druckraum 3b mündet eine Zuführleitung 8, durch welche der Brennstoff in den Druckraum 3b einbringbar ist. An den Druckraum 3b schliesst sich ein unterer Bereich 3c der Längsbohrung 3 an, der sich bis zu dem Nadelsitz 5 erstreckt. Stromunterhalb des Nadelsitzes 5 bildet ein sogenanntes Sacklochvolumen 3d das Ende der Längsbohrung 3. Von diesem Sacklochvolumen zweigen die Düsenlochbohrungen 61 ab.

Der obere Teil der Düsennadel 4, der sich im oberen Bereich 3a der Längsbohrung 3 befindet, ist von seinem Durchmesser so bemessen, dass dieser obere Bereich 3a als Führung für die Düsennadel 4 dient. Im Bereich des Druckraums 3b verjüngt sich die Düsennadel 4 und erstreckt sich dann mit kleinerem Durchmesser durch den unteren Bereich 3c der Längsbohrung bis zum Nadelsitz 5, mit dem das untere abgeschrägt und/oder abgerundete Ende der Düsennadel 4 zusammenwirkt. Im unteren Bereich 3c der Längsbohrung 3 ist die Düsennadel 4 im wesentlichen ungeführt. Die Düsennadel 4 ist in an sich bekannter Weise, z.B. über einen Stössel 11 der von einer nicht dargestellten Druckfeder federbelastet ist, gegen den Nadelsitz 5 vorgespannt. Der Grundkörper 2 ist mittels einer Hülse 12 mit dem den Stössel 11 enthaltenden Teil verbunden.

Der Düsenkopf 6, der sich im montierten Zustand der Brennstoffeinspritzdüse 1 im Verbrennungsraum 20 befindet, ist an seiner Aussenseite mit einer Beschichtung 7 aus einer heisskorrosionsbeständigen Legierung versehen, sodass zumindest diejenigen Bereiche des Grundkörpers 2, die sich im Betriebszustand im Verbrennungsraum 20 befinden und somit den höchsten thermischen und korrosiven Belastungen ausgesetzt sind, durch die Beschichtung 7 geschützt sind.

Vorzugsweise ist der Nadelsitz 5, so wie dies Fig. 1 und 2 zeigen, in unmitelbarer Nähe, also kurz oberhalb der obersten Düsenlochbohrung 61, angeordnet. Dadurch ist das Sacklochvolumen 3d, dass sich stromabwärts des Nadelsitzes 5 befindet, besonders klein, im Vergleich zu bekannten Konstruktionen mit separatem Düsenkopf 6 beispielsweise bis zu zehnmal kleiner. Aus diesem Grunde kann man bei der hier beschriebenen Ausgestaltung auch von einer sacklochfreien Brennstoffeinspritzdüse sprechen. Dieses sehr kleine Sacklochvolumen 3d hat den Vorteil, dass sich der Einspritzvorgang durch Schliessen des Durchlasses am Nadelsitz 5 praktisch unmittelbar beenden lässt, ohne dass dann noch ein nachteiliges Nachtropfen von Brennstoff in den Verbrennungsraum 20 erfolgen kann.

Fig. 1 zeigt die Brennstoffeinspritzdüse 1 im geschlossenen Zustand, das heisst die Druckfeder drückt über den Stössel 11 das untere Ende der Düsennadel 4 dichtend in den Nadelsitz 5. Im Betriebszustand wird die Brennstoffeinspritzdüse 1 hydraulisch wie folgt betätigt. Der Brennstoff wird z. B. mittels einer nicht dargestellten Einspritzpumpe durch die Zuführleitung 8 in den Druckraum 3b gefördert und beaufschlagt dort die Düsennadel 4. Wenn der Brennstoffdruck im Druckraum 3b grösser ist als die durch die Druckfeder bewirkte Vorspannung (Öffnungsdruck), wird die Düsennadel 4 angehoben und öffnet somit am Nadelsitz 5 den Durchlass zu den Düsenlochbohrungen 61, sodass der Einspritzvorgang beginnt, das heisst, der Brennstoff gelangt von dem Druckraum 3b durch den unteren Bereich 3c der Längsbohrung 3 zu den Düsenlochbohrungen 61 und tritt durch diese in den Verbrennungsraum 20 des Zylinders ein. Am Ende der Einspritzung nimmt der Brennstoffdruck im Druckraum 3b ab. Sobald er kleiner wird als die von der Druckfeder erzeugte Vorspannung (Schliessdruck), wird die Düsennadel 4 in den Nadelsitz 5 gedrückt. Dadurch wird der Durchlass zu den Düsenlochbohrungen 61 am Nadelsitz 5 geschlossen und der Einspritzvorgang beendet. Da das Sacklochvolumen 3d stromabwärts des Nadelsitzes 5 vernachlässigbar klein ist, kann nach dem Ende des Einspritzvorgangs praktisch kein Brennstoff mehr in den Verbrennungsraum 20 tropfen.

Bevorzugt ist der Grundkörper 2 der Brennstoffeinspritzdüse 1 hinsichtlich seiner äusseren Gestalt so ausgebildet, dass seine äussere Begrenzungsfläche einen konisch ausgestalteten Bereich 21 (siehe Fig. 2) aufweist, mit dem sich die Brennstoffdüse 1 im montierten Zustand im Zylinderkopf 10 abstützt, so wie es beispielsweise in Fig. 1 dargestellt ist. Aus dieser konischen Ausgestaltung resultiert eine grosse Kontaktfläche zwischen dem Grundkörper 2 und dem Zylinderkopf 10, die eine gute Wärmeübertragung zwischen dem Grundkörper 2 und dem typischerweise gekühlten Zylinderkopf 10 ermöglicht. Somit wird einer zu hohen Temperatur insbesondere des Düsenkopfs 6, der im Betrieb den höchsten Temperaturen ausgesetzt ist, effizient entgegengewirkt, weil die Wärme sehr gut aus dem Grundkörper 2 in den Zylinderkopf 10 abfliessen kann. Aufgrund des hohen Wärmeabflusses aus dem Grundkörper 2 durch die von dem konischen Bereich 21 gebildete Kontaktfläche werden insbesondere auch der Nadelsitz 5 und die Düsenlochbohrungen 61 nicht so heiss wie bei bekannten Konstruktionen. Dies hat auch den Vorteil, dass die Trompetenbildung (Koksablagerungen) z. B. an den Düsenlochbohrungen 61, geringer ist.

Der konisch ausgestaltete Bereich 21 ist ferner im Hinblick auf eine mechanisch robuste Lagerung der Brennstoffeinspritzdüse 1 vorteilhaft, weil er eine gute Kraftübertragung vom Grundkörper 2 auf den Zylinderkopf 10 ermöglicht. So werden beispielsweise die Druckbelastungen, die beim Betätigen der Düsennadel 4 auftreten, auf den Zylinderkopf 10 übertragen und von diesem aufgenommen.

Vorzugsweise liegt der Konuswinkel α des konisch ausgestalteten Bereichs 21 zwischen 15° und 35°, insbesondere zwischen etwa 22° und 26°. Für kleinere Konuswinkel als etwa 15° besteht nämlich die Gefahr, dass es beim Betrieb zu einem Einpressen der Brennstoffeinspritzdüse in den Zylinderkopf 10 kommt, sodass diese nur noch unter sehr hohem Arbeitsaufwand entfernbar ist. Für grössere Konuswinkel resultiert eine schlechtere Kraftübertragung von dem Grundkörper 2 auf den Zylinderkopf 10, was sich negativ auf die Lagerung bzw. die Abstützung der Brennstoffeinspritzdüse 1 im Zylinderkopf 10 auswirkt.

Erfindungsgemäss ist der Grundkörper 2, der zumindest die Längsbohrung 3, den Nadelsitz 5 und den Düsenkopf 6 umfasst, einstückig aus einem härtbaren Werkstoff, insbesondere einem Vergütungsstahl, hergestellt, und der Düsenkopf 6 weist die Beschichtung 7 aus einer heisskorrosionsbeständigen Legierung auf, die vor dem Härten des Grundkörpers 2 aufgebracht wird. Als Material für den einstückigen Grundkörper 2 eignen sich insbesondere alle an sich bekannten wärme- und korrosionsbeständigen Vergütungsstähle wie beispielsweise X38 Cr Mo V 51 oder X40 Cr Mo V 51 oder M390 (Warenzeichen). Ein Vergütungsstahl ist ein Stahl, dessen mechanische Eigenschaften wie Festigkeit und Härte durch eine Wärmebehandlung deutlich verbessert werden können.

Als Legierungsmaterial für die Beschichtung 7 eignen sich alle heisskorrosionsbeständigen Legierungen, insbesondere solche Nickelbasislegierungen wie sie unter den Namen Nimonic 80a (Warenzeichen), Nimonic 81 (Warenzeichen), Inconel 625 (Warenzeichen) und Inconel 671 (Warenzeichen) bekannt sind, oder solche Kobaltbasislegierungen, die unter dem Namen Stellite bekannt sind, wie z.B. Stellit 6 und Stellit 7. Auch der unter dem Namen PM 2000 bekannte Werkstoff ist als Beschichtungsmaterial geeignet

Das erfindungsgemässe Verfahren wird gemäss einer bevorzugten Ausführungsform wie folgt durchgeführt: Zunächst wird aus einem wärmebständigen Vergütungsstahl, der sich noch im ungehärteten Zustand befindet, der einstückige Grundkörper 2 mit der Längsbohrung 3, dem Nadelsitz 5 und dem Düsenkopf 6 hergestellt, wobei der Grundkörper 2 bereits im wesentlichen seine gewünschten endgültige Gestalt erhält. Diese Herstellung erfolgt mittels bekannter Bearbeitungsmethoden wie Drehen, Fräsen, Schleifen und Bohren. Anschliessend wird der noch ungehärtete Grundkörper 2 am Düsenkopf 6 mit der heisskorrosionsbeständigen Beschichtung 7 versehen. Die für die Beschichtung 7 verwendete Legierung wird vorzugsweise mittels eines Laserauftragverfahrens wie Lasercladding aufgebracht. Natürlich eignen sich auch andere Auftragverfahren wie Plasmaspritzen, Auftragschweissen oder pulvermetallurgische Verfahren. Je nachdem, welche konkreten Werkstoffe für den Grundkörper 2 einerseits und die Beschichtung 7 andererseits verwendet werden, kann ein geeignetes Auftragverfahren gewählt werden. Nachdem die Beschichtung 7 aufgebracht ist, werden die Düsenlochbohrungen 61 in den Düsenkopf 6 des Grundkörpers 2 gebohrt. Danach können die Innenwände der Bohrungen vorzugsweise mittels eines elektrochemischen Verfahrens, insbesondere mittels Elysieren, nachbearbeitet werden. Dabei werden auch die Kanten an den Übergängen von der zentralen Längsbohrung 3 zu den Düsenlochbohrungen 61 entgratet und abgerundet. Nach diesem Verarbeitungsschritt wird der Grundkörper 2 mittels einer Wärmebehandlung vergütet, das heisst gehärtet oder durchgehärtet, wodurch der Werkstoff, aus dem der Grundkörper 2 hergestellt ist, seine endgültigen mechanischen Eigenschaften erhält. Durch das Härten oder Durchhärten des Grundkörpers 2 erhält dieser eine grössere Festigkeit und Härte. Schliesslich kann der Grundkörper 2 noch einer mechanischen Endbearbeitung, wie z. B Schleifen oder Polieren, unterzogen werden.

Das erfindungsgemässe Verfahren bzw. die erfindungsgemässe Brennstoffeinspritzdüse 1 bringen insbesondere den Vorteil mit sich, dass alle die Komponenten, die beim Betrieb starken mechanischen Beanspruchungen unterliegen, wie die Düsenlochbohrungen 61, der Nadelsitz 5 und die Führung der Düsennadel 4, die durch den oberen Bereich 3a der Längsbohrung 3 realisiert ist, aus einem sehr harten und mechanisch stark beanspruchbaren Material, nämlich dem gehärteten oder durchgehärteten Werkstoff, bestehen, während die Partien, die im Betriebszustand den höchsten thermischen und korrosiven Belastungen ausgesetzt sind, nämlich der Düsenkopf 6, durch die Beschichtung 7 auf seiner Aussenseite geschützt ist. Dadurch ist es möglich, den Werkstoff für den Grundkörper 2 mit den mechanisch stärker beanspruchten Komponenten hauptsächlich unter dem Aspekt möglichst guter mechanischer Eigenschaften, wie grosser Härte, Zugfestigkeit, Kriechfestigkeit usw., auszuwählen und die Legierung für die Beschichtung 7 hauptsächlich unter dem Aspekt einer sehr guten Widerstandsfähigkeit gegen Heisskorrosion. Es ist daher hicht mehr nötig, für das Brennstoffeinspritzventil, speziell beispielsweise für den Düsenkopf 6, einen Werkstoff zu verwenden, der lediglich einen Kompromiss zwischen hoher Härte einerseits und hoher Widerstandsfähigkeit gegen Heisskorrosion andererseits darstellt.

Da insbesondere auch der Düsenkopf 6 aus dem sehr harten Werkstoff hergestellt ist, ist es problemlos möglich, den Nadelsitz 5 im Düsenkopf 6 vorzusehen, also in unmittelbarer Nähe der Düsenlochbohrungen 61, sodass der bereits erwähnte Vorteil des sehr geringen Sacklochvolumens 3d resultiert. Aufgrund der Härte und der mechanischen Eigenschaften des Werkstoffs, aus dem der Grundkörper 2 hergestellt ist, ist auch der Nadelsitz 5 robust genug, um beispielsweise den Schlagbeanspruchungen insbesondere durch die Düsennadel beim Betrieb des Dieselmotors dauerhaft standzuhalten.

Auch im Hinblick auf andere mechanische Belastungen ist die grosse Härte des Grundkörpers 2 von Vorteil. So enthält beispielsweise das für Grossdieselmotoren häufig als Brennstoff verwendete Schweröl in der Regel Partikel, die eine stark erosive Wirkung haben und somit zu Materialabrieb insbesondere am Nadelsitz 5 und in den Düsenlochbohrungen 61 führen. Auch können Kavitation und Erosion, die insbesondere am Nadelsitz 5 und in den Düsellochbohrungen 61 auftreten, zu Materialabtragungen oder Beschädigungen führen. Aufgrund der grossen Härte des Grundkörpers 2 werden solche Materialabtragungen oder Beschädigungen im Bereich des Nadelsitzes 5 und der Düsenlochbohrungen 61 zumindest deutlich reduziert, was sich sehr positiv auf die Lebensdauer der Brennstoffeinspritzdüse 1 auswirkt.

Ein wesentlicher Aspekt der Erfindung ist darin zu sehen, dass das Härten bzw. das Durchhärten des Grunkörpers 2 erst nach dem Aufbringen der Beschichtung 7 auf den Düsenkopf 6 erfolgt. Durch diese Reihenfolge wird nämlich vermieden, dass nach dem Härten unerwünschte Änderungen in den mechanischen Eigenschaften des Grundkörpers verursacht werden. Es besteht also beispielsweise keine Gefahr, dass die durch die Härtung oder Durchhärtung bewirkten Veränderungen im Gefüge des Grundkörpers 2 anschliessend ganz oder teilweise "rückgängig" gemacht werden.

Es versteht sich, dass die Erfindung nicht auf Anwendungen für oder in Zweitakt-Grossdieselmotoren beschränkt ist, sondern auch für Anwendungen in anderen Motorentypen wie insbesondere Viertakt-Grossdieselmotoren oder Dieselmotoren im allgemeinen geeignet ist.

## Patentansprüche

1. Verfahren zum Herstellen einer Brennstoffeinspritzdüse für einen Dieselmotor, insbesondere einen Zweitakt-Grossdieselmotor, die eine Längsbohrung (3) zum Führen einer Düsennadel (4) und zum Einbringen von Brennstoff aufweist, welche Längsbohrung (3) sich bis in einen Düsenkopf (6) erstreckt, wo mindestens eine Düsenlochbohrung (61) von der Längsbohrung (3) ausgeht, sowie einen in der Längsbohrung (3) angeordneten Nadelsitz (5) zum Zusammenwirken mit der Düsennadel (4), **dadurch gekennzeichnet, dass** zunächst ein einstückiger Grundkörper (2), der zumindest die Längsbohrung (3), den Nadelsitz (5) und den Düsenkopf (6) umfasst, aus einem härtbaren Werkstoff, insbesondere einem Vergütungsstahl, im ungehärteten Zustand und im wesentlichen in der gewünschten äusseren Endform hergestellt wird, dass anschliessend eine Beschichtung (7) aus einer heisskorrosionsbeständigen Legierung auf den Düsenkopf (6) aufgebracht wird, dass danach die Düsenlochbohrung (61) hergestellt wird, und dass dann der Grundkörper (2) gehärtet wird.

2. Verfahren nach Anspruch 1, wobei der Nadelsitz (5) unmittelbar stromaufwärts der Düsenlochbohrung (61) angeordnet wird.

3. Verfahren nach Anspruch 1 oder 2, bei welchem die Beschichtung (7) des Düsenkopfs (6) mittels eines Laserauftragverfahrens, insbesondere mittels Lasercladding, erfolgt.

4. Verfahren nach einem der Ansprüche 1-3, bei welchem die Düsenlochbohrung (61) vor dem Härten elektrochemisch, insbesondere mittels Elysieren, bearbeitet wird.

5. Brennstoffeinspritzdüse für einen Dieselmotor, insbesondere einen Zweitakt-Grossdieselmotor, die eine Längsbohrung (3) zum Führen einer Düsennadel (4) und zum Einbringen von Brennstoff aufweist, welche Längsbohrung (3) sich bis in einen Düsenkopf (6) erstreckt, wo mindestens eine Düsenlochbohrung (61) von der Längsbohrung (3) ausgeht, sowie einen in der Längsbohrung (3) angeordneten Nadelsitz (5) zum Zusammenwirken mit der Düsennadel (4), **dadurch gekennzeichnet, dass** ein einstückiger Grundkörper (2) vorgesehen ist, der zumindest die Längsbohrung (3), den Nadelsitz (5) und den Düsenkopf (6) umfasst, und der aus einem härtbaren Werkstoff, insbesondere einem Vergütungsstahl, im ungehärteten Zustand und im wesentlichen in der gewünschten äusseren Endform hergestellt und anschliessend gehärtet ist, dass der Düsenkopf (6) des Grundkörpers (2) eine Beschichtung (7) aus einer heisskorrosionsbeständigen Legierung aufweist, die vor dem Härten des Grundkörpers (2) aufgebracht ist und dass die Düsenlochbohrung (61) nach dem Aufbringen der Beschichtung (7) und vor dem Härten des Grundkörpers (2) hergestellt ist.

6. Brennstoffeinspritzdüse nach Anspruch 5, bei welcher der Nadelsitz (5) unmittelbar stromaufwärts der Düsenlochbohrung (61) angeordnet ist.

7. Brennstoffeinspritzdüse nach Anspruch 5 oder 6, bei welcher die Beschichtung (7) des Düsenkopfs (6) mittels eines Laserauftragsverfahrens, insbesondere mittels Lasercladding, erfolgt ist.

8. Brennstoffeinspritzdüse nach einem der Ansprüche 5-7, bei welchem die äussere Begrenzungsfläche des Grundkörpers (2) einen konisch ausgestalteten Bereich (21) zum Abstützen der Brennstoffeinspritzdüse (1) in einem Zylinderkopf (10) aufweist.

9. Brennstoffeinspritzdüse nach Anspruch 8, wobei der Konuswinkel (α) des konischen Bereichs (21) zwischen 15° und 35°, insbesondere zwischen etwa 22° und 26°, liegt.

10. Dieselmotor, insbesondere Zweitakt-Grossdieselmotor mit einer Brennstoffeinspritzdüse nach einem der Ansprüche 5 bis 9 oder mit einer Brennstoffeinspritzdüse hergestellt nach einem Verfahren gemäss einem der Ansprüche 1-4.

## Claims

1. Method for the manufacture of a fuel injection nozzle for a diesel engine, in particular a two-stroke large diesel engine, having a longitudinal bore (3) for the guiding of a nozzle needle (4) and for the introduction of fuel, said longitudinal bore (3) extending into a nozzle head (6) where at least one nozzle hole bore (61) starts from the longitudinal bore (3), and having a needle seat (5) which is arranged in the longitudinal bore (3) in order to cooperate with the nozzle needle (4), **characterised in that** first a one-piece basic body (2), which includes at least the longitudinal bore (3), the needle seat (5) and the nozzle head (6), is manufactured of a hardenable material, in particular of a heat treatable steel, in the unhardened state and substantially in the desired outer final shape; **in that** a coating (7) of a hot-corrosion resistant alloy is subsequently applied to the nozzle head (6); **in that** afterwards the nozzle hole bore (61) is made; and **in that** the basic body (2) is then hardened.

2. Method in accordance with claim 1 in which the needle seat (5) is arranged directly upstream of the nozzle hole bore (61).

3. Method in accordance with claim 1 or claim 2 in which the coating (7) of the nozzle head (6) is carried out by means of a laser application process, in particular by means of laser cladding.

4. Method in accordance with one of the claims 1 to 3 in which the nozzle hole bore (61) is processed electrochemically prior to the hardening, in particular by electroshaping.

5. Fuel injection nozzle for a diesel engine, in particular a two-stroke large diesel engine, which has a longitudinal bore (3) for the guiding of a nozzle needle (4) and for the introduction of fuel, said longitudinal bore (3) extending into a nozzle head (6) where at least one nozzle hole bore (61) starts from the longitudinal bore (3), as well as a needle seat (5) which is arranged in the longitudinal bore (3) in order to cooperate with the nozzle needle (4), **characterised in that** a one-piece basic body (2) is provided which includes at least the longitudinal bore (3), the needle seat (5) and the nozzle head (6), and which is manufactured of a hardenable material, in particular of a heat treatable steel, in the unhardened state and substantially in the desired outer final shape and is subsequently hardened; **in that** the nozzle head (6) of the basic body (2) has a coating (7) of a hot-corrosion resistant alloy which is applied prior to the hardening of the basic body (2); and **in that** the nozzle hole bore (61) is made after the application of the coating (7) and prior to the hardening of the basic body (2).

6. Fuel injection nozzle in accordance with claim 5 in which the needle seat (5) is arranged directly upstream of the nozzle hole bore (61).

7. Fuel injection nozzle in accordance with claim 5 or claim 6 in which the coating (7) of the nozzle head (6) is carried out by means of a laser application process, in particular by means of laser cladding.

8. Fuel injection nozzle in accordance with one of the claims 5 to 7 in which the outer boundary surface of the basic body (2) has a conically designed region (21) for the supporting of the fuel injection nozzle (1) in a cylinder head (10).

9. Fuel injection nozzle in accordance with claim 8, with the cone angle (α) of the conical region (21) lying between 15° and 35°, in particular between about 22° and 26°.

10. Diesel engine, in particular a two-stroke large diesel engine, including a fuel injection nozzle in accordance with one of the claims 5 to 9 or including a fuel injection nozzle which is manufactured in accordance with a method in accordance with one of the claims 1 to 4.

## Revendications

1. Procédé de fabrication d'un injecteur de combustible pour un moteur Diesel, notamment un grand moteur Diesel à deux temps, qui présente un perçage longitudinal (3) pour le guidage d'une aiguille d'injection (4) et pour l'introduction de combustible, ce perçage longitudinal (3) s'étendant jusque dans une tête d'injection (6), où au moins un trou d'injection percé (61) part du perçage longitudinal (3), ainsi qu'un siège d'aiguille (5) disposé dans le perçage longitudinal (3) pour la coopération avec l'aiguille d'injection (4), **caractérisé en ce que** d'abord un corps de base en une pièce (2), qui comprend au moins le perçage longitudinal (3), le siège d'aiguille (5) et la tête d'injection (6), est fabriqué en un matériau durcissable, notamment en un acier d'amélioration, à l'état non durci et sensiblement dans la forme finale extérieure recherchée, **en ce qu'**ensuite, un revêtement (7) en un alliage résistant à la corrosion à chaud est appliqué à la tête d'injection (6), **en ce qu'**ensuite le perçage de trou d'injection (61) est réalisé et qu'ensuite, le corps de base (2) est durci.

2. Procédé selon la revendication 1, où le siège d'aiguille (5) est disposé directement en amont du perçage de trou d'injection (61).

3. Procédé selon la revendication 1 ou 2, où le revêtement (7) de la tête d'injection (6) a lieu au moyen d'un procédé d'application à laser, notamment par plaquage au laser.

4. Procédé selon l'une des revendications 1 à 3, où le perçage de trou d'injection (61) est traité avant le durcissement d'une manière électrochimique, notamment par usinage électrolytique.

5. Injecteur de combustible pour un moteur Diesel, notamment un grand moteur Diesel à deux temps, qui présente un perçage longitudinal (3) pour le guidage d'une aiguille d'injection (4) et pour l'introduction de combustible, ce perçage longitudinal (3) s'étendant jusque dans une tête d'injection (6), où au moins un perçage de trou d'injection (61) part du perçage longitudinal (3), ainsi qu'un siège d'aiguille (5) disposé dans le perçage longitudinal (3) pour la coopération avec l'aiguille d'injection (4), **caractérisé en ce qu'**un corps de base (2) en une pièce est prévu qui comprend au moins le perçage longitudinal (3), le siège d'aiguille (5) et la tête d'injection (6) et qui est fabriqué en un matériau durcissable, notamment en un acier d'amélioration, à l'état non durci et sensiblement dans la forme finale extérieure souhaitée et qui est ensuite durci, **en ce que** la tête d'injection (6) du corps de base (2) présente un revêtement (7) en un alliage résistant à la corrosion à chaud qui est appliqué avant le durcissement du corps de base (2), et **en ce que** le perçage de trou d'injection (61) est réalisé après l'application du revêtement (7) et avant le durcissement du corps de base (2).

6. Injecteur de combustible selon la revendication 5, où le siège d'aiguille (5) est disposé directement en amont du perçage de trou d'injection (61).

7. Injecteur de combustible selon la revendication 5 ou 6, où le revêtement (7) de la tête d'injection (6) a lieu au moyen d'un procédé d'application à laser, notamment par plaquage au laser.

8. Injecteur de combustible selon l'une des revendications 5 à 7, où la face de délimitation extérieure du corps de base (2) présente une zone (21) réalisée d'une manière conique pour l'appui de l'injecteur de combustible (1) dans une culasse de cylindre (10).

9. Injecteur de combustible selon la revendication 8, où l'angle conique (α) de la zone conique (21) se situe entre 15° et 35°, notamment entre environ 22° et 26°.

10. Moteur Diesel, notamment grand moteur Diesel à deux temps avec un injecteur de combustible selon l'une des revendications 5 à 9 ou avec un injecteur de combustible fabriqué d'après un procédé selon l'une des revendications 1 à 4.
